# EUROPEAN PATENT APPLICATION

(11) **EP 2 148 508 A1**
(43) Date of publication of application: **27.01.2010**
(21) Application number: 09251591.5
(22) Date of filing: 18.06.2009
(51) Int. Cl.: H04N 7/173, G06Q 30/00

(54) **Information processing apparatus, terminal apparatus, and program**

(30) Priority: 22.07.2008 JP 2008189102
(71) Applicant: Sony Corporation, Tokyo (JP)
(72) Inventor: Yamagishi, Yasuaki, Tokyo (JP); Shima, Hisato, Tokyo (JP); Igarashi, Tatsuya, Tokyo (JP); Fujisawa, Kenji, Tokyo (JP); Kawamoto, Yoji, Tokyo (JP); Futagami, Motomasa, Tokyo (JP); Nakajima, Yukako, Tokyo (JP)
(74) Representative: Horner, David Richard

(57) **Abstract**

An information processing apparatus includes a content purchase history storage unit in which a content purchase history for each user is stored, a metadata storage unit in which metadata of a plurality of contents is stored, and a metadata retrieval unit to retrieve, upon reception of a metadata retrieval request that is sent from a terminal apparatus of the user via a network and includes information for identifying a user and a retrieval condition, metadata of a content that meets the retrieval condition from the metadata storage unit, judge whether the content retrieved has already been purchased based on the content purchase history of the user that is stored in the content purchase history storage unit, and send a retrieval result of the metadata of the content that includes a judgment result to the terminal apparatus via the network as a metadata retrieval response.

## Description

### Background of the Invention

The present invention relates to an information processing apparatus and a terminal apparatus capable of being connected to each other via a network, and to a program.

An IPTV (Internet Protocol Television) is a collective term for services or broadcasting technologies thereof for distributing digital television programs by using IPs. An IMS (IP Multimedia Sub-system) is a standard candidate for session control in an IPTV. A candidate for a standard metadata format in standardization of an IPTV is TV-Anytime metadata. The TV-Anytime metadata is metadata standardized by the ETSI (European Telecommunications Standards Institute). For example, as a metadata format of an IPTV standard in DVB (digital video broadcasting) or an IPTV standard in ITU-T, TV-Anytime metadata is considered as a candidate.

For example, Japanese Patent Application Laid-open No. 2004-247844 (Paragraphs 0018 to 0021) (hereinafter, referred to as Patent Document 1) discloses a system for performing online operation and management of video a content by using TV-Anytime. In Patent Document 1, when a user selects a content which the user wants to view from content list information recommended for the user by the system, a purchase request of this content is sent to a content purchase processing server. The content purchase request includes information that specifies the content, such as a title, a genre, and a keyword extracted from metadata associated with the content. The content purchase processing server performs user authentication, and then sends, to the user, license information (license) for viewing the content based on the information that specifies the content included in the content purchase request.

However, in a rule of a current TV-Anytime, in response to a query with respect to metadata, only a retrieval processing for retrieving a desired content by a user is performed. Information on a content purchase situation, that is, information on whether the user has already purchased the retrieved content is not sent as a retrieval result. In order for the user to know the content purchase situation, the user has to use another query to request a server to retrieve a content based on a purchase history and make an inquiry about contents that have been purchased. Accordingly, with increase in number of contents that have been purchased, a burden on the user increases when a desired content is retrieved therefrom. In addition, the query processing for retrieving a content and the query processing for making an inquiry about a content purchase history are separately performed by a server, increasing an entire burden on the server by the query processings, which is a problem.

### SUMMARY OF THE INVENTION

Embodiments of the present invention provide an information processing apparatus, a terminal apparatus, and a program that are capable of obtaining metadata of a content that meets a retrieval condition specified by a user and information indicating whether the content has been purchased by the user as a metadata retrieval result.

According to an embodiment, there is provided an information processing apparatus. The information processing apparatus includes a content purchase history storage unit, a metadata storage unit, and a metadata retrieval unit. In the content purchase history storage unit, a content purchase history for each user is stored. In the metadata storage unit, metadata of a plurality of contents is stored. The metadata retrieval unit retrieves, upon reception of a metadata retrieval request that is sent from a terminal apparatus of the user via a network and includes information for identifying a user and a retrieval condition, metadata of a content that meets the retrieval condition from the metadata storage unit, judges whether the content retrieved has already been purchased based on the content purchase history of the user that is stored in the content purchase history storage unit, and sends a retrieval result of the metadata of the content that includes a judgment result to the terminal apparatus via the network as a metadata retrieval response.

Upon reception of the metadata retrieval request including the information for identifying the user and the retrieval condition from the terminal apparatus, the information processing apparatus according to the embodiment retrieves the metadata of the content that meets the retrieval condition, judges whether the retrieved content has already been purchased or not from the content purchase history that is associated with the user based on the information for identifying the user, and sends to the terminal apparatus of the user the metadata of the content including the judgment result as a response. As a result, it is possible to reduce a burden when the user of the terminal apparatus retrieves a content that has already been purchased of a content that is not yet purchased.

The information processing apparatus according to one embodiment may further include an update unit to update, upon reception of a content purchase request including information for identifying the user and the content from the terminal apparatus, the content purchase history of the user that is stored in the content purchase history storage unit.

With this structure, the content purchase history of the user can be updated in real time, and the information processing apparatus can send to the terminal apparatus a response based on a latest content purchase history in response to the next metadata retrieval request from the terminal apparatus of the user.

In the information processing apparatus according to one embodiment, the metadata retrieval request may be a TV-Anytime metadata query including one of an element and an attribute in which the information for identifying the user is stored, and the metadata retrieval response may be a TV-Anytime metadata including one of an element and an attribute in which information indicating whether the content has already been purchased is stored.

According to another embodiment, there is provided a terminal apparatus. The terminal apparatus includes a metadata retrieval request unit, a retrieval result receiving unit, and a display unit. The metadata retrieval request unit sends a metadata retrieval request including information for identifying a user and a retrieval condition to the information processing apparatus via the network. The retrieval result receiving unit receives, as a metadata retrieval response, a metadata retrieval result of a content that is sent from the information processing apparatus in response to the metadata retrieval request, the metadata retrieval result including a result of judging whether the content has already been purchased. The display unit displays the metadata retrieval result received by the retrieval result receiving unit so that whether the content has already been purchased is discernible for each content.

The terminal apparatus according to the embodiment can obtain a content metadata retrieval result including a result of judging whether the content has already been purchased or not from the information processing apparatus as a metadata retrieval response, only by sending the metadata retrieval request including the information for identifying the user and the retrieval condition to the information processing apparatus. In addition, the metadata retrieval result is displayed so that whether the content has already been purchased or not is discernible. Therefore, the user can discern the content that has already been purchased and the content that is not yet purchased at a glance, thereby improving the operability of the user.

The terminal apparatus according to one embodiment may further include a purchase request sending unit to send a purchase request of the content that is not yet purchased and discernibly displayed on the display unit to the information processing apparatus via the network. With this structure, upon reception of the metadata retrieval response, a processing for purchasing the content that is not yet purchased by the user can be immediately performed.

According to another embodiment, there is provided a program to cause a computer incorporated in an information processing apparatus to function as a content purchase history storage unit, a metadata storage unit, and a metadata retrieval unit. In the content purchase history storage unit, a content purchase history for each user is stored. In the metadata storage unit, metadata of a plurality of contents is stored. The metadata retrieval unit retrieves, upon reception of a metadata retrieval request that is sent from a terminal apparatus of the user via a network and includes information for identifying a user and a retrieval condition, metadata of a content that meets the retrieval condition from the metadata storage unit, judges whether the content retrieved has already been purchased based on the content purchase history of the user that is stored in the content purchase history storage unit, and sends a retrieval result of the metadata of the content that includes a judgment result to the terminal apparatus via the network.

As described above, according to the embodiments, it is possible to obtain, as a metadata retrieval result, the content metadata that meets the retrieval condition specified by the user with the information indicating whether the content has already been purchased or not.

Further particular and preferred aspects of the present invention are set out in the accompanying independent and dependent claims. Features of the dependent claims may be combined with features of the independent claims as appropriate, and in combinations other than those explicitly set out in the claims.

### Brief Description of Drawings

The present invention will be described further, by way of example only, with reference to preferred embodiments thereof as illustrated in the accompanying drawings, in which:
Fig. 1 is a diagram showing a structure of an IPTV system according to an embodiment of the present invention;
Fig. 2 is a diagram showing an operation sequence in which an IPTV client terminal requests a metadata retrieval of an IPTV server, and based on a response to the request, data of a content is obtained in the IPTV system shown in Fig. 1;
Fig. 3 is a diagram showing an example of a TV-Anytime metadata query in which a user token can be described;
Fig. 4 is a diagram showing a specific example of TV-Anytime metadata;
Fig. 5 is a diagram showing a display example of a content list screen;
Fig. 6 is a diagram showing an example of a content purchase confirmation screen;
Fig. 7 is a processing sequence in a case where a content that is not yet purchased is selected;
Fig. 8 is a diagram showing a modified example of the TV-Anytime metadata query;
Fig. 9 is another modified example of the TV-Anytime metadata;
Fig. 10 is a diagram showing a modified example of the TV-Anytime metadata that is a response to the TV-Anytime metadata query shown in Fig. 9;
Fig. 11 is a diagram for explaining a method of storing a user token or a device token in a header field of an HTTP header; and
Fig. 12 is a block diagram showing a structural example of hardware of a computer.

### Description of Preferred Embodiments

Hereinafter, an embodiment of the present invention will be described with reference to the drawings.

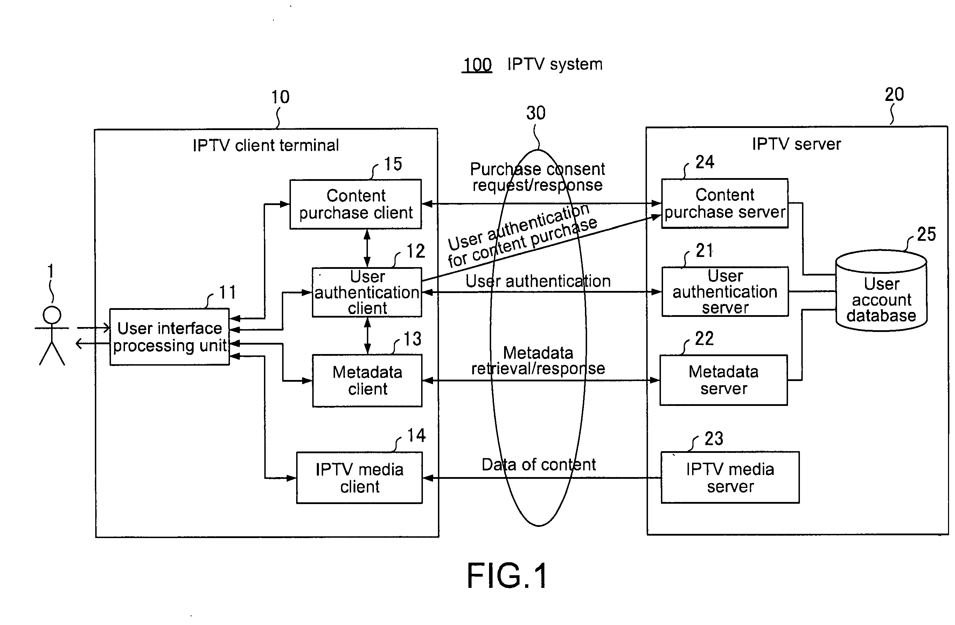

Fig. 1 is a block diagram showing a structure of an IPTV system 100 according to an embodiment of the present invention.

As shown in Fig. 1, the IPTV system 100 according to this embodiment includes an IPTV client terminal 10 serving as a content reception apparatus, an IPTV server 20, and a network 30 capable of connecting the IPTV client terminal 10 and the IPTV server 20. The IPTV server 20 can distribute a content by streaming, downloading, or the like and grants a license necessary to reproduce the content.

The IPTV client terminal 10 is a terminal apparatus such as a PC (personal computer), a set-top box, and a TV. The IPTV client terminal 10 includes a user interface processing unit 11, a user authentication client 12, a metadata client 13, an IPTV media client 14, a content purchase client 15, and the like.

Specifically, the IPTV server 20 is constituted of one or more server apparatuses. Herein, a case where the IPTV server 20 is constituted of a plurality of server apparatuses will be described. The IPTV server 20 includes a user authentication server 21, a metadata server 22, an IPTV media server 23, a content purchase server 24, a user account database 25, and the like.

Next, a detailed structure of the IPTV client terminal 10 will be described.

The user interface processing unit 11 performs a processing of inputting/outputting with respect to a user 1. For example, the user interface processing unit 11 performs processings of inputting various instructions given by the user 1 to the user authentication client 12, the metadata client 13, and the IPTV media client 14, and visually indicating to the user 1 various information items from the user authentication client 12, the metadata client 13, the IPTV media client 14, and the content purchase client 15.

The user authentication client 12 performs a processing necessary for user authentication with the user authentication server 21 in the IPTV server 20. More specifically, the user authentication client 12 sends a user authentication request including a password and a user ID encrypted by, for example, a public key cryptosystem to the user authentication server 21 in the IPTV server 20 via the network 30. When the user authentication client 12 obtains a user token as a user authentication response from the user authentication server 21, the user authentication client 12 sends to the metadata client 13 a sending request of a metadata retrieval request with the user token. The meaning of the user token will be described later.

Based on the sending request of the metadata retrieval request from the user authentication client 12, the metadata client 13 sends a metadata retrieval request that mainly includes TV-Anytime metadata query including the user token to the metadata server 22 in the IPTV server 20 via the network 30. In addition, the metadata client 13 obtains TV-Anytime metadata of contents from the metadata server 22 via the network 30 in response to the metadata retrieval request. At this time, the TV-Anytime metadata as a response from the metadata server 22 includes information indicating whether the user 1 has already purchased the contents for each of them as a retrieval result. The information will be described later. The metadata client 13 gives the user interface processing unit 11 the obtained TV-Anytime metadata, and indicates a content list to the user 1.

The IPTV media client 14 accesses the IPTV media server 23 and obtains data of a content encrypted. Then, the IPTV media client 14 uses a content key obtained in advance, to decrypt the data of the encrypted content and perform a reproduction processing.

The content purchase client 15 performs a processing necessary to purchase a content with respect to the content purchase server 24 of the IPTV server 20.

Hereinbefore, the structure of the IPTV server 20 is described.

Next, a structure of the IPTV server 20 will be described in detail.

Upon reception of the user authentication request from the user authentication client 12 of the IPTV client terminal 10, the user authentication server 21 performs user authentication by checking a combination of a user ID and a password included in the user authentication request against user account information registered in the user account database 25. Here, the user account information includes a user ID, a password, a content purchase history, a user token, and the like of a regular user. Those information items are stored in the user account database 25 while being associated with one another. When it is judged that the user to be authenticated is the regular user, the user authentication server 21 creates the user token for the user, and sends a user authentication response including the user token to the user authentication client 12 of the IPTV client terminal 10 via the network 30.

The metadata server 22 stores metadata of a plurality of contents. Upon reception of the metadata retrieval request from the metadata client 13 of the IPTV client terminal 10, the metadata server 22 retrieves metadata of contents that meet a condition of a query included in the metadata retrieval request. Further, based on the user token included in the metadata retrieval request, the metadata server 22 queries the user account database 25 to find the content purchase history that is registered therein and associated with the user token, creates TV-Anytime metadata based on the content purchase history and the retrieval result of the metadata, and sends the TV-Anytime metadata as a metadata retrieval response, to the metadata client 13 of the IPTV client terminal 10 via the network 30.

The IPTV media server 23 manages content data encrypted by a content key. In response to a content obtainment request from the IPTV media client 14 of the IPTV client terminal 10, the IPTV media server 23 sends target content data to the IPTV media client 14 of the IPTV client terminal 10 via the network 30.

The content purchase server 24 performs a processing relating to purchase of a content with the content purchase client 15. Along with the purchase of the content by the content purchase client 15, the content purchase server 24 updates the content purchase history of the user that is stored in the user account database 25.

Hereinbefore, the structure of the IPTV server 20 is described.

Next, a description will be given on a series of operations from when the IPTV client terminal 10 makes the metadata retrieval request to the IPTV server 20 until data of a content is obtained based on a response of the request in the IPTV system 100 according to this embodiment.

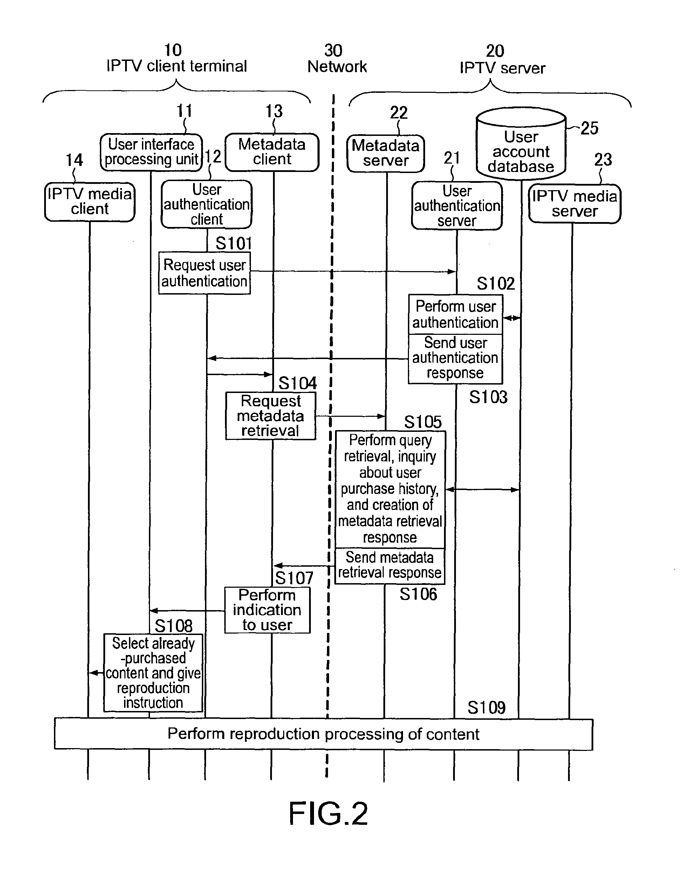

Fig. 2 is a flowchart showing the operations.

First, in the IPTV client terminal 10, the user authentication client 12 sends a user authentication request including a password and a user ID encrypted by, for example, a public key cryptosystem, to the user authentication server 21 in the IPTV server 20 via the network 30 (Step S101).

In the IPTV server 20, upon reception of the user authentication request from the user authentication client 12 of the IPTV client terminal 10, the user authentication server 21 performs user authentication based on the password and the user ID included in the user authentication request and the user account information registered in the user account database 25 (Step S102).

When the user authentication is successfully performed, the user authentication server 21 creates the user token with respect to the user, and sends the user authentication response including the user token to the user authentication client 12 (Step S103). Herein, the user token refers to a password or the like for identifying the user who makes the metadata retrieval request. Even when a user logins with the same user ID, different user tokens are created for each login and given to the user 1.

In the IPTV client terminal 10, upon reception of the user authentication response including the user token from the user authentication server 21, the user authentication client 12 notifies the metadata client 13 of a request to send the metadata retrieval request with the user token.

In the IPTV client terminal 10, when the metadata client 13 is notified of the request to send the metadata retrieval request with the user token, the metadata client 13 creates a TV-Anytime metadata query by using the user token, and sends the metadata retrieval request mainly including the TV-Anytime metadata query to the metadata server 22 in the IPTV server 20 via the network 30 (Step S104).

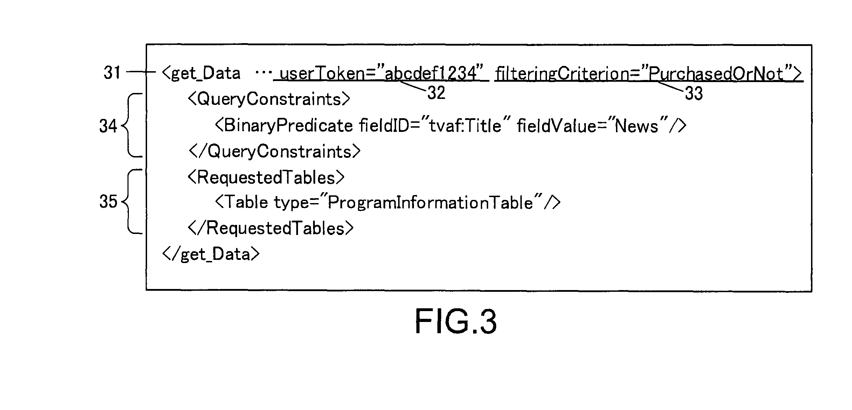

Here, a description will be given on the TV-Anytime metadata query in which the user token can be described. Fig. 3 is a diagram showing an example of the TV-Anytime metadata query in which the user token can be described.

In formats of current TV-Anytime metadata queries, there is no element and attribute in which a parameter for identifying the user can be described. In view of this, in this embodiment, in a root element 31, a userToken attribute 32 capable of storing the user token is newly introduced. In addition, in the root element 31, a filteringCriterion attribute 33 is newly introduced. This is information for distinguishing between the content metadata that has been purchased and otherwise to specify whether to describe it in the TV-Anytime metadata. In the example shown in Fig. 3, as a value of the filteringCriterion attribute 33, "PurchasedOrNot" is stored, which is a value of distinguishing between the content metadata that has been purchased and otherwise and specifying that it is returned.

A QueryConstraints element 34 is an element that describes the query condition. In this example, a condition that a content title includes a term "News" is specified. A RequestedTables element 35 is an element that specifies a table type of metadata to be a target of the query. In this example, it is specified to return a table type "ProgramInformation". The ProgramInformation is metadata relating to identification of contents, and includes a content ID, a title and a genre of a content, content access information such as a URN (Uniform Resource Name) as an access destination of the content, access information necessary for accessing a license server as a distributor of a license for reproducing the content, a broadcasting time period (start time and end time), and an attribute or a substance of the content, for example.

Let us return to the description on the operation. In the IPTV server 20, upon reception of the metadata retrieval request from the metadata client 13, the metadata server 22 retrieves metadata of contents that meet the condition of the query stored in the QueryConstraints element 34 of the TV-Anytime metadata query that is mainly contained in the metadata retrieval request. Next, the metadata server 22 extracts metadata corresponding to a table type stored in the RequestedTables element 35 of the TV-Anytime metadata query, from metadata of the contents that meet the condition. In this example, metadata of the ProgramInformation Table that relates to identification of the contents is extracted. Subsequently, the metadata server 22 make an inquiry to the user account database 25 about the content purchase history that is associated with the user token stored in the userToken attribute 32 of the root element 31. Then, the metadata server 22 creates the TV-Anytime metadata based on the content purchase history and the metadata retrieval result (Step S105), and sends a metadata retrieval response that mainly includes the TV-Anytime metadata to the metadata client 13 of the IPTV client terminal 10 via the network 30 (Step S106).

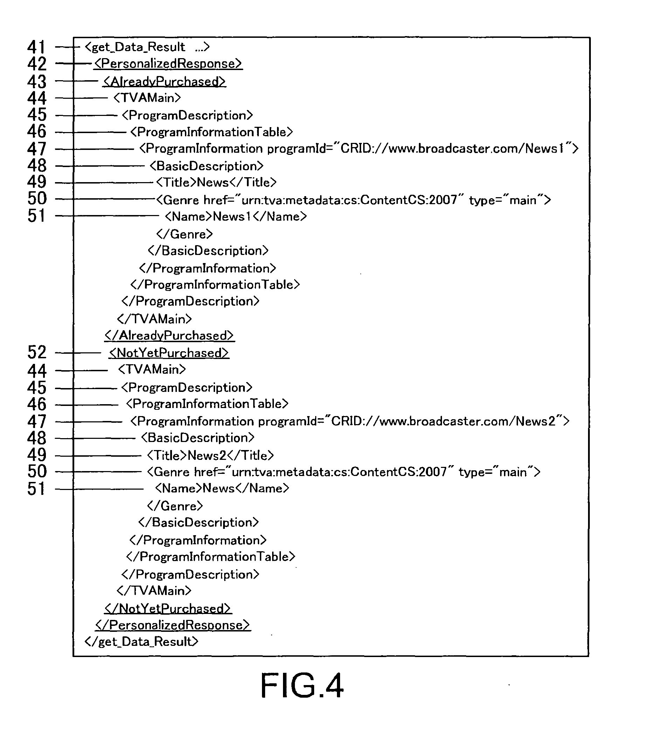

Here, with reference to Fig. 4, a specific example of the TV-Anytime metadata that is created by the metadata server 22 and sent to the IPTV client terminal 10 will be described. Fig. 4 is a diagram showing a specific example of the TV-Anytime metadata.

A get_Data_Result element 41 is a root element of a TV-Anytime metadata response format. A PersonalizedResponse element 42 is an element indicating that this response is personalized for each user. An AlreadyPurchased element 43 indicates that TV-Anytime metadata which is put between tags is metadata of a content that has already been purchased. A TVAMain element 44 is an element in which the TV-Anytime metadata of the content is stored. As a subelement of the TVAMain element 44, a ProgramDescription element 45 is disposed. In the ProgramDescription element 45, a ProgramInformationTable element 46 is disposed. In the ProgramInformationTable element 46, a ProgramInformation element 47 in which metadata for each content is stored is disposed, and as a programId attribute value therein, a content ID for identifying the contents is stored. In the ProgramInformation element 47, a BasicDescription element 48 is disposed. In the BasicDescription element 48, a Title element 49 in which a title of the content is stored and a Genre element 50 in which information for specifying a classificatory scheme of the genre of the content is stored are disposed. Further, as a subelement of the Genre element 49, a Name element 51 in which the genre name is stored is disposed.

A NotYetPurchased element 52 indicates that the TV-Anytime metadata put between the tags is metadata of a content that is not yet purchased. As in the AlreadyPurchased element 43, in the NotYetPurchased element 52, the TVAMain element 44, the ProgramDescription element 45, the ProgramInformationTable element 46, the ProgramInformation element 47, the BasicDescription element 48, the Title element 49, the Genre element 50, and the Name element 51 are disposed.

In the above, the PersonalizedResponse element 42, the AlreadyPurchased element 43, and the NotYetPurchased element 51 are newly introduced elements in this embodiment.

Let us return to the description of the operation. In the IPTV client terminal 10, upon reception of the metadata retrieval request that mainly includes the TV-Anytime metadata as described above from the metadata server 22 of the IPTV server 20, the metadata client 13 creates a content list screen based on the TV-Anytime metadata and indicates the list to the user 1 through the user interface processing unit 11 (Step S107).

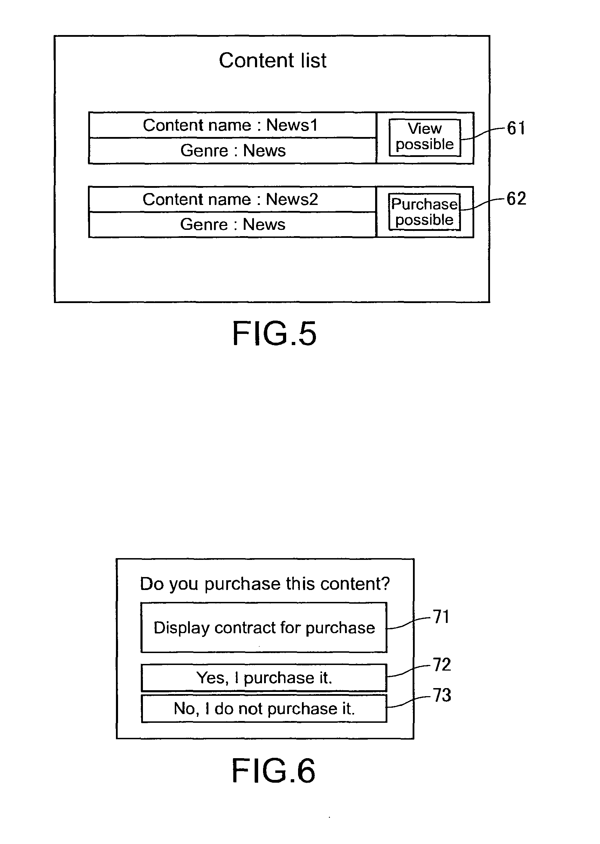

Fig. 5 is a diagram showing a display example of the content list screen indicated to the user 1. In the TV-Anytime metadata shown in Fig. 4, a content whose title is "News1" has already been purchased. Therefore, in the content list screen of Fig. 5, a mark 61 indicating that the content can be viewed is displayed. The user 1 can confirm that the content has already been purchased and can be viewed immediately. Meanwhile, a content whose title is "News2" is a content that is not yet purchased. Therefore, in the content list screen of Fig. 5, a mark 62 indicating that the content can be purchased, that is, is not yet purchased is displayed.

When the user 1 selects the content that has been purchased and inputs an instruction to reproduce the content in the content list screen through the user interface processing unit 11, the user interface processing unit 11 extracts a content ID of the selected content from the TV-Anytime metadata and gives the content ID to the IPTV media client 14 (Step S108). Based on the obtained content ID, the IPTV media client 14 obtains encrypted content data corresponding to the content ID from the IPTV media server 23, and decrypts the encrypted content data by using a content key obtained in advance, thereby performing a reproduction processing (Step S109).

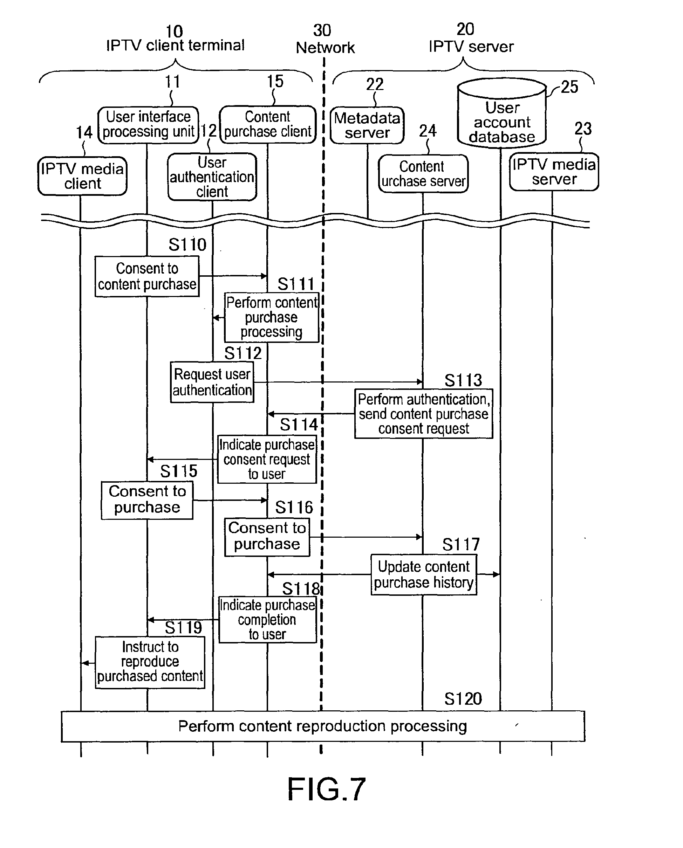

Next, a description will be given on an operation in a case where a content that is not yet purchased is selected in the content list screen of Fig. 5. Fig. 7 is a processing sequence in the case where the content that is not yet purchased is selected.

Fig. 6 is a diagram showing an example of a content purchase confirmation screen displayed when the content that is not purchased is selected in the content list screen of Fig. 5. For example, in the content list screen of Fig. 5, the mark 62 indicating that the content can be purchased functions as a click button. When the user 1 clicks the mark 62, a screen in which a descriptive sentence 71 of a contract for purchase in a license and buttons 72 and 73 used when the user 1 selects consent/non-consent to the purchase are disposed is displayed. Subsequent operations will be described in the following, on the assumption that the consent button 72 is clicked by the user 1 on this screen.

When detected that the consent button 72 is clicked in the content purchase confirmation screen of Fig. 6, the user interface processing unit 11 notifies the content purchase client 15 of a content purchase request (Step S110).

Upon reception of the content purchase request, the content purchase client 15 starts a processing for purchasing the content. First, the content purchase client 15 requests the user authentication client 12 to send a user authentication request including a content ID of the content as the purchase target (Step S111). In response to this request, the user authentication client 12 sends a password and a user ID encrypted by, for example, the public key cryptosystem and the user authentication request for content purchase that includes a content ID, to the user authentication server 21 in the IPTV server 20 via the network 30 (Step S112).

In the IPTV server 20, upon reception of the user authentication request for the content purchase from the user authentication client 12 of the IPTV client terminal 10, the user authentication server 21 performs user authentication based on the combination of the password and the user ID included in the user authentication request and user account information registered in the user account database 25. If the user authentication is successfully performed, the user authentication server 21 sends a purchase consent request including the content ID of the content as the purchase target to the content purchase client 15 of the IPTV client terminal 10 via the network 30 (Step S113).

In the IPTV client terminal 10, upon reception of the purchase consent request from the user authentication server 21, the content purchase client 15 reads data including a title and genre of the corresponding content from the TV-Anytime metadata based on the content ID included in the purchase consent request, and creates a content purchase consent confirmation screen including the data, to indicate the screen to the user 1 through the user interface processing unit 11 (Step S114).

When the user 1 inputs the fact that the user 1 consents to the content purchase in the content purchase consent confirmation screen through the user interface processing unit 11 (Step S115), the content purchase client 15 sends a consent notification of the content purchase as a content purchase request to the content purchase server 24 of the IPTV server 20 via the network 30 (Step S116).

In the IPTV server 20, upon reception of the content purchase request from the content purchase client 15 of the IPTV client terminal 10, the content purchase server 24 updates the content purchase history registered in the user account database 25 while associating it with the user ID of the user 1 (Step S117). After that, the content purchase server 24 sends a completion notification of the content purchase to the content purchase client 15 of the IPTV client terminal 10 via the network 30.

In the IPTV client terminal 10, upon reception of the completion notification of the content purchase, the content purchase client 15 indicates the completion of the content purchase to the user 1 through the user interface processing unit 11 (Step S118). After that, when the user 1 inputs an instruction to reproduce the purchased content through the user interface processing unit 11, the user interface processing unit 11 extracts the content ID of the selected content from the TV-Anytime metadata and gives the content ID to the IPTV media client 14 (Step S119). Based on the obtained content ID, the IPTV media client 14 obtains data of the encrypted content corresponding to the content ID from the IPTV media server 23, and decrypts the encrypted content data by using the content key obtained in advance, thereby performing a reproduction processing (Step S120).

As described above, according to this embodiment, the following effect can be obtained.

Upon reception of the TV-Anytime metadata query including the retrieval condition of the query and the user token as the metadata retrieval request from the IPTV client terminal 10, the IPTV server 20 retrieves metadata of the content that meets the condition of the query, and judges whether the retrieved content has already been purchased or not from the content purchase history that is associated with the user token. Then, the IPTV server 20 sends, as a response, the metadata of the content including a result of the judgment to the IPTV client terminal 10 of the user 1. That is, only by sending the metadata retrieval request once, the IPTV client terminal 10 can obtain, as the metadata retrieval response, the metadata of the content that meets the condition of the query with the information indicating that the content has been purchased or not for each content. As a result, it is possible to reduce the burden when the user 1 of the IPTV client terminal 10 retrieves a content that has already been purchased or a content that is not yet purchased, and to reduce the entire burden due to the query processing in the IPTV server 20.

Further, according to this embodiment, the content list as the retrieval result of the metadata is indicated to the user 1 of the IPTV client terminal 10 so that the content that has been purchased and the content that is not yet purchased can be self-explanatorily distinguished. Therefore, an operability of the user when the user selects the content that has been purchased and inputs the instruction to reproduce the content is improved.

Furthermore, according to this embodiment, the content that is not yet purchased is selected from the content list as the metadata retrieval result, and then a processing for purchasing the selected content can be immediately performed.

Next, modified examples according to embodiments of the present invention will be described.

### (First modified example)

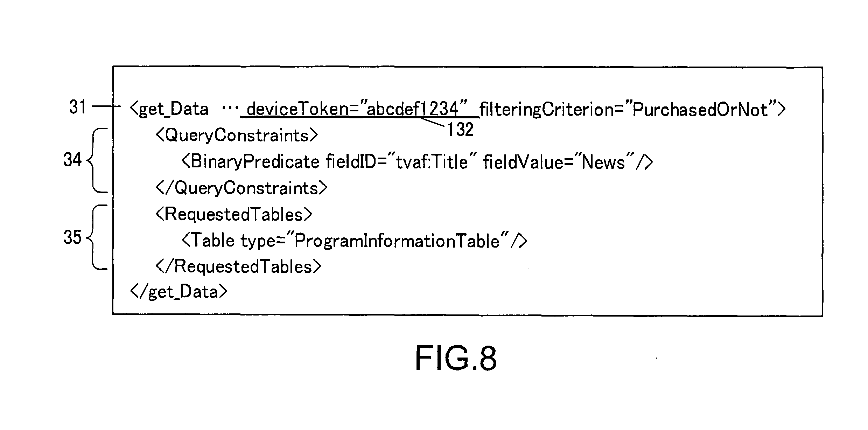

Fig. 8 is a diagram showing a first modified example of the TV-Anytime metadata query. In this modified example, instead of the user token (see, Fig. 3) for identifying the user, a device token for identifying a device (IPTV client terminal 10) is used. Specifically, in Fig. 8, an attribute 132 whose name is "deviceToken" is newly introduced as the attribute of the root element 31, and "abcdef1234" is specified as a value (device token) of the deviceToken attribute 132. The other elements of the TV-Anytime metadata query are the same as those shown in Fig. 3. The user ID, the content purchase history, and the like are associated with the device token and registered in the user account database 25. The other operations are the same in the above embodiment.

### (Second modified example)

Next, a second modified example of the TV-Anytime metadata query and a modified example of the TV-Anytime metadata that is a response to the TV-Anytime metadata query will be described.

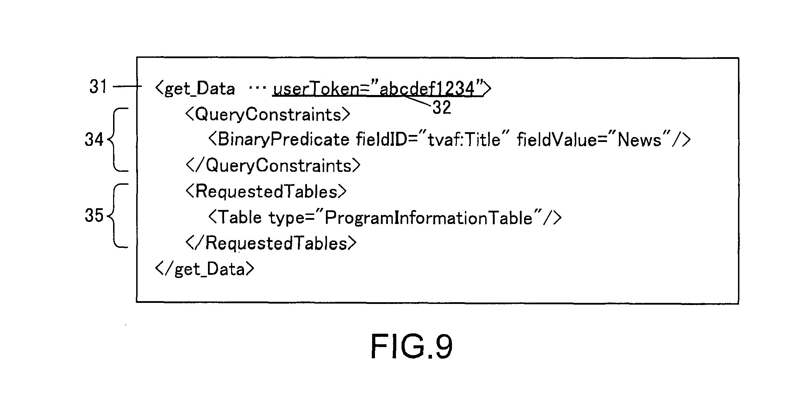

Fig. 9 is a diagram showing the second modified example of the TV-Anytime metadata query. In the TV-Anytime metadata query, the filteringCriterion attribute 33 in the root element 31 is excluded from the TV-Anytime metadata query shown in Fig. 3.

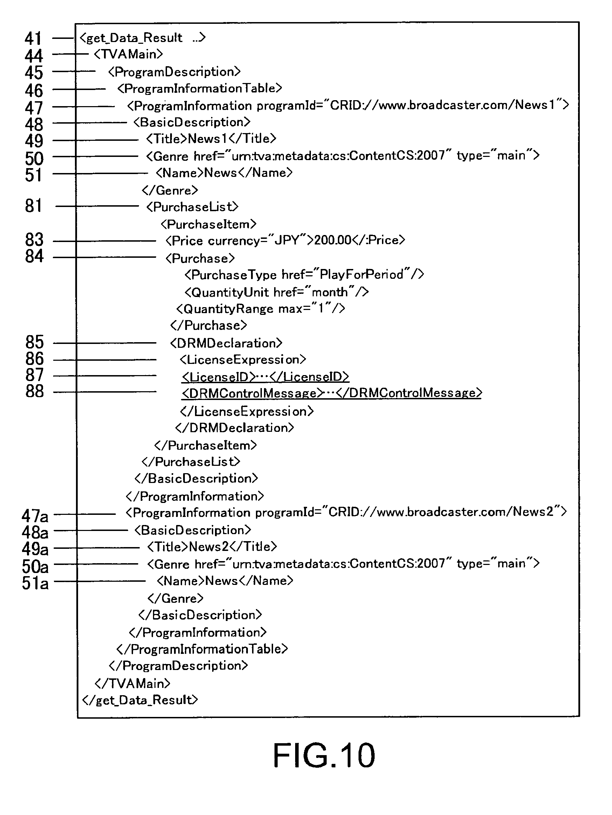

Fig. 10 is a diagram showing the modified example of the TV-Anytime metadata that is a response to the TV-Anytime metadata query shown in Fig. 9. The PersonalizedResponse element 42 and the AlreadyPurchased element 43 that are adopted for the TV-Anytime metadata shown in Fig. 4 are not adopted in this modified example.

In the modified example of the TV-Anytime metadata, in the ProgramInformation element 47 that is an element in which metadata corresponding to each content is stored, a PurchaseList element 81 in which information relating to the content purchase is stored is disposed. A DRMDeclaration element 85 in which information relating to the content purchase history is stored is subordinated to the PurchaseList element 81. In a case where the content has already been purchased, a LicenseExpression element 86 is added as a subelement of the DRMDeclaration element 85. As subelements of the LicenseExpression element 86, a LicenseID element 87 in which an identifier of a license is stored and a DRMControlMessage element 88 in which information for obtaining the license is stored are added.

Accordingly, in the IPTV client terminal 10, upon reception of the metadata retrieval request that mainly includes the TV-Anytime metadata as described above from the metadata server 22 of the IPTV server 20, the metadata client 13 judges whether the content has already been purchased or not based on presence/absence of the LicenseExpression 86 below the DRMDeclaration element 85 of the TV-Anytime metadata, and can create the content list screen. That is, in Fig. 10, based on the fact that the LicenseExpression element 86 is subordinated to the DRMDeclaration element 85 in one ProgramInformation element 47, it is judged that the content has already been purchased. Based on the fact that the LicenseExpression element 86 is absent in a second ProgramInformation element 47a, it is judged that the content is not yet purchased.

It should be noted that, in the PurchaseList element 81, a Price element 83, a Purchase element 84, and the like are disposed in addition to the DRMDeclaration element 85. In the Price element 83, a purchase price of the content is stored. In the example of Fig. 10, a purchase price of "200 yen" is stored. In the Purchase element 84, a PurchaseType href attribute, a QuantityUnit href attribute, a QuantityRange max attribute, and the like are disposed. Based on those attributes, details relating to the content purchase are specified. Here, the PurchaseType href attribute is an attribute for specifying a format of the purchase. In the example of Fig. 10, "PlayForPeriod" is specified as the attribute value thereof. The "PlayForPeriod" means "reproduction for a limited time period". The QuantityUnit href attribute is an attribute for specifying a unit of the time period, and the QuantityRange max attribute is an attribute for specifying the number of units of the time period. In the example of Fig. 10, as the QuantityUnit href attribute value, a "month" is specified, and as the QuantityRange max attribute value, "1" is specified. That is, those values means "one month". Therefore, in the Purchase element 84 shown in Fig. 10, data meaning "reproduction for a limited time period of one month" is stored.

### (Third modification example)

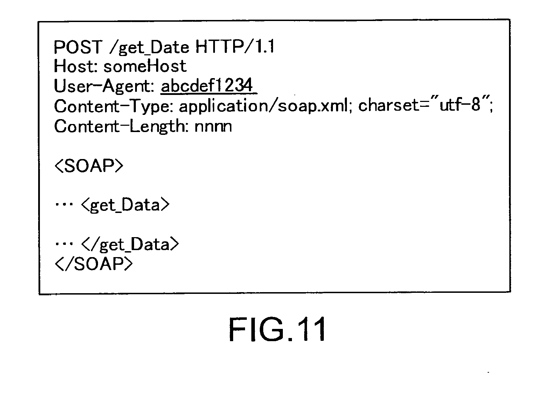

In the above embodiment and modified examples, the user token or the device token are stored as the attribute value of the root element of the TV-Anytime metadata query. As shown in Fig. 11, a method in which the user token or the device token is stored in a header field of an HTTP header may be considered.

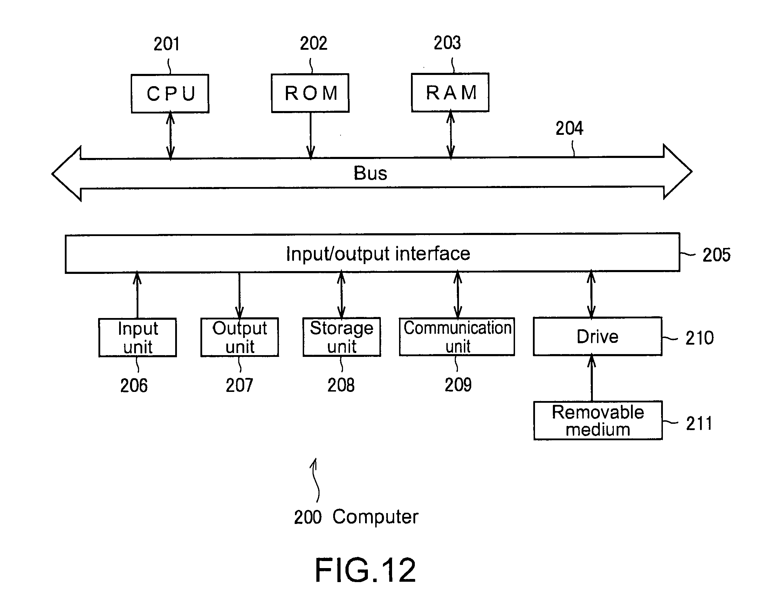

Fig. 12 is a block diagram showing a structural example of hardware of a computer in which the series of processings described above are executed according to a program.

In a computer 200, a CPU (Central Processing Unit) 201, a ROM (Read Only Memory) 202, and a RAM (Random Access Memory) 203 are connected to one another via a bus 204.

In addition, to the bus 204, an input/output interface 205 is connected. To the input/output interface 205, an input unit 206 including a keyboard, a mouse, a microphone, and the like, an output unit 207 including a display, a speaker, and the like, a storage unit 208 including a hard disk, a non-volatile memory, and the like, a communication unit 209 including a network interface and the like, and a drive 210 for driving a removable medium 211 such as a magnetic disk, an optical disk, a magneto-optical disk, and a semiconductor memory are connected.

In the computer 200 structured as described above, the CPU 201 loads a program stored in the storage unit 208 via the input/output interface 205 and the bus 204 and executes the program, thereby performing the series of processings described above, for example.

It should be noted that the program executed by the computer 200 may be a program according to which the processings are performed in chronological order described in this specification, or may be a program according to which the processings are performed in parallel or at a required timing, e.g., at a timing of program call.

In addition, the program may be executed by one computer or may be dispersedly executed by a plurality of computers. Further, the program may be transferred to a remote computer and executed.

The present application contains subject matter related to that disclosed in Japanese Priority Patent Application JP 2008-189102 filed in the Japan Patent Office on July 22, 2008, the entire contents of which is hereby incorporated by reference.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information processing apparatus, comprising:
a content purchase history storage unit in which a content purchase history for each user is stored;
a metadata storage unit in which metadata of a plurality of contents is stored; and
a metadata retrieval unit to retrieve, upon reception of a metadata retrieval request that is sent from a terminal apparatus of the user via a network and includes information for identifying a user and a retrieval condition, metadata of a content that meets the retrieval condition from the metadata storage unit, judge whether the content retrieved has already been purchased based on the content purchase history of the user that is stored in the content purchase history storage unit, and send a retrieval result of the metadata of the content that includes a judgment result to the terminal apparatus via the network as a metadata retrieval response.

2. The information processing apparatus according to claim 1, further comprising:
an update unit to update, upon reception of a content purchase request including information for identifying the user and the content from the terminal apparatus, the content purchase history of the user that is stored in the content purchase history storage unit.

3. The information processing apparatus according to claim 2,
wherein the metadata retrieval request is a TV-Anytime metadata query including one of an element and an attribute in which the information for identifying the user is stored, and
wherein the metadata retrieval response is a TV-Anytime metadata including one of an element and an attribute in which information indicating whether the content has already been purchased is stored.

4. A terminal apparatus capable of being connected with the information processing apparatus according to claim 1 via a network, comprising:
a metadata retrieval request unit to send a metadata retrieval request including information for identifying a user and a retrieval condition to the information processing apparatus via the network;
a retrieval result receiving unit to receive, as a metadata retrieval response, a metadata retrieval result of a content that is sent from the information processing apparatus in response to the metadata retrieval request, the metadata retrieval result including a result of judging whether the content has already been purchased; and
a display unit to display the metadata retrieval result received by the retrieval result receiving unit so that whether the content has already been purchased is discernible for each content.

5. The terminal apparatus according to claim 4, further comprising:
a purchase request sending unit to send a purchase request of the content that is not yet purchased and discernibly displayed on the display unit to the information processing apparatus via the network.

6. The terminal apparatus according to claim 5,
wherein the metadata retrieval request is a TV-Anytime metadata query including one of an element and an attribute in which the information for identifying the user is stored, and
wherein the metadata retrieval response is a TV-Anytime metadata including one of an element and an attribute in which information indicating whether the content has already been purchased is stored.

7. A program to cause a computer incorporated in an information processing apparatus to function as:
a content purchase history storage unit in which a content purchase history for each user is stored;
a metadata storage unit in which metadata of a plurality of contents is stored; and
a metadata retrieval unit to retrieve, upon reception of a metadata retrieval request that is sent from a terminal apparatus of the user via a network and includes information for identifying a user and a retrieval condition, metadata of a content that meets the retrieval condition from the metadata storage unit, judge whether the content retrieved has already been purchased based on the content purchase history of the user that is stored in the content purchase history storage unit, and send a retrieval result of the metadata of the content that includes a judgment result to the terminal apparatus via the network.
